# EUROPÄISCHE PATENTANMELDUNG

(11) **EP 4 803 357 A1**
(43) Veröffentlichungstag der Anmeldung: **09.09.2026**
(21) Anmeldenummer: 26160140.5
(22) Anmeldetag: 23.02.2026
(51) Int. Cl.: B60N 2/02, B60N 2/18, B60N 2/24

(54) **FAHRZEUGSITZ MIT ELEKTRISCHER SITZTIEFEN- UND SITZNEIGUNGSVERSTELLUNG**

(30) Priorität: 03.03.2025 DE 102025107945
(71) Anmelder: GRAMMER AG, 92289 Ursensollen (DE)
(72) Erfinder: BÖHMER, Michael, 67822 Waldgrehweiler (DE); LOREY, Konstantin, 92546 Schmidgaden (DE); LOREY, Alexander, 93142 Maxhütte-Haidhof, (DE); SCHUSTJEW, Segej, 92237 Sulzbach-Rosenberg (DE)
(74) Vertreter: Hannke Bittner & Partner mbB Regensburg

(57) **Zusammenfassung**

Die Erfindung betrifft Fahrzeugsitz (1), umfassend einen Fahrzeugsitzunterbau (2) mit einem unteren Anteil (3) und einem dazu höhenverstellbaren oberen Anteil (4) und einem an dem oberen Anteil (4) befestigten Fahrzeugsitzaufbau (5), wobei der Fahrzeugsitzaufbau (5) einen zumindest teilweise schalenförmigen Sitzträger (6), eine Sitztiefenplatte (7) zur Verstellung einer Sitztiefe und eine Sitzneigungsplatte (8) zur Verstellung einer Sitzneigung umfasst, wobei die Sitztiefenplatte (7) in einer Längsrichtung (X) verschiebbar in dem Sitzträger (6) angeordnet ist und die Sitzneigungsplatte (8) um eine in Breitenrichtung (Y) verlaufende erste Drehachse (A) drehbar und oberhalb der Sitztiefenplatte (7) angeordnet ist, wobei der Fahrzeugsitz (1) eine erste elektrische Antriebsvorrichtung (9) zur Verstellung der Sitztiefe aufweist, wobei die erste elektrische Antriebsvorrichtung (9) in einer Höhenrichtung (Z) zwischen Sitztiefenplatte (7) und Sitzneigungsplatte (8) angeordnet ist.

## Beschreibung

Die Erfindung betrifft einen Fahrzeugsitz umfassend einen Fahrzeugsitzunterbau mit einem unteren Anteil und einem dazu höhenverstellbaren oberen Anteil und einem an dem oberen Anteil befestigten Fahrzeugsitzaufbau, wobei der Fahrzeugsitzaufbau einen zumindest teilweise schalenförmigen Sitzträger, eine Sitztiefenplatte zur Verstellung einer Sitztiefe und eine Sitzneigungsplatte zur Verstellung einer Sitzneigung umfasst, wobei die Sitztiefenplatte in einer Längsrichtung verschiebbar in dem Sitzträger angeordnet ist und die Sitzneigungsplatte um eine in Breitenrichtung verlaufende Drehachse drehbar und oberhalb der Sitztiefenplatte angeordnet ist.

Nutzfahrzeuge, wie Landmaschinen, Baumaschinen oder auch Transportfahrzeuge, werden üblicherweise über einen längeren Zeitraum am Stück genutzt, weshalb der Sitzkomfort für einen Insassen eine übergeordnete Rolle spielt. Entsprechende Fahrzeugsitze werden deshalb mit einer Vielzahl an Komforteinrichtungen, wie zum elektrischen Verstellsystemen versehen.

Bei bisherigen Fahrzeugsitzen beschränken sich die elektrischen Verstellsysteme auf eine Einstellung der Sitzhöhe, einen Abstand zu einem Lenkrad oder der Neigung der Rückenlehne. Eine elektrische Einstellung einer Sitzneigung oder einer Sitztiefe ist bislang nicht vorgesehen oder nur nachteilig umzusetzen. Im Gegensatz zu PKW, bei denen unterhalb des Fahrzeugsitzes viel Platz für die Anordnung elektrischer Antriebe ist, ist bei Nutzfahrzeugen der Bauraum stark begrenzt. Insbesondere weisen Fahrzeugsitze in Nutzfahrzeugen häufig zusätzliche Federsysteme auf, die wesentlich zur Gesamthöhe des Sitzes beitragen.

Aufgrund der begrenzten Kabinenhöhe der Nutzfahrzeuge werden Sitzteile dementsprechend direkt auf den Federsystemen bzw. auf Verstellschienen angeordnet, die auf den Federsystemen befestigt sind. Zur Anordnung von elektrischen Verstellsystemen ist es dann notwendig, zusätzlichen Bauraum beispielsweise durch ein dickeres Sitzpolster oder einen zusätzlichen Abstand zwischen Sitzträger und Verstellschiene zu schaffen, um Bauteile wie einen Elektromotor unterbringen zu können.

Demzufolge ist es Aufgabe der Erfindung einen Fahrzeugsitz bereitzustellen, bei dem bei gleichem Bauraum wie bei rein mechanischen Sitzen und ohne eine Reduktion der Polsterdicke oder einer Erhöhung des Sitzindexpunktes eine vollelektrische Verstellung zumindest der Sitztiefe, bevorzugt auch der Sitzneigung möglich ist.

Zur Lösung der Aufgabe wird ein erfindungsgemäßer Fahrzeugsitz bereitgestellt, umfassend einen Fahrzeugsitzunterbau mit einem unteren Anteil und einem dazu höhenverstellbaren oberen Anteil und einem an dem oberen Anteil befestigten Fahrzeugsitzaufbau, wobei der Fahrzeugsitzaufbau einen Sitzträger, eine Sitztiefenplatte zur Verstellung einer Sitztiefe und eine Sitzneigungsplatte zur Verstellung einer Sitzneigung umfasst, wobei die Sitztiefenplatte in einer Längsrichtung verschiebbar in dem Sitzträger angeordnet ist und die Sitzneigungsplatte um eine in Breitenrichtung verlaufende erste Drehachse drehbar und oberhalb der Sitztiefenplatte angeordnet ist, wobei der Fahrzeugsitz eine erste elektrische Antriebsvorrichtung zur Verstellung der Sitztiefe aufweist, wobei die erste elektrische Antriebsvorrichtung in einer Höhenrichtung zwischen Sitztiefenplatte und Sitzneigungsplatte angeordnet ist.

Die Aufgabe wird ebenfalls gelöst durch einen Fahrzeugsitz umfassend einen zumindest teilweise schalenförmigen Sitzträger, eine Sitztiefenplatte zur Verstellung einer Sitztiefe und eine Sitzneigungsplatte zur Verstellung einer Sitzneigung, wobei die Sitztiefenplatte in einer Längsrichtung verschiebbar in dem Sitzträger angeordnet ist und die Sitzneigungsplatte um eine in Breitenrichtung verlaufende erste Drehachse drehbar und oberhalb der Sitztiefenplatte angeordnet ist, wobei der Fahrzeugsitz eine erste elektrische Antriebsvorrichtung zur Verstellung der Sitztiefe aufweist, wobei die erste elektrische Antriebsvorrichtung in einer Höhenrichtung zwischen Sitztiefenplatte und Sitzneigungsplatte angeordnet ist.

Dementsprechend sollen alle Merkmale eines Fahrzeugsitzes mit Fahrzeugsitzunterbau, falls anwendbar, auch für einen Fahrzeugsitz ohne Fahrzeugsitzunterbau gelten.

Längsrichtung, Breitenrichtung und Höhenrichtung orientieren sich im Folgenden an der üblichen Ausrichtung eines Fahrzeugsitzes, bei dem sich eine Sitzfläche im Wesentlichen entlang der Längsrichtung und der Breitenrichtung erstreckt und eine Rückenlehne im Wesentlichen entlang der Breitenrichtung und der Höhenrichtung erstreckt. Ortsangaben wie oben, unten, vorn, hinten usw. werden im Folgenden aus der Sicht eines Insassen des Fahrzeugsitzes gemacht.

Üblicherweise weist der Fahrzeugsitz einen Fahrzeugsitzunterbau auf, der mit einer Karosserie eines Fahrzeuges verschraubt ist und einen darüber angeordneten Fahrzeugsitzaufbau auf. Der Unterbau besteht dabei aus einem Scherengestell, dass einen unteren Anteil mit einem oberen Anteil höhenverstellbar verbindet. Zusätzlich ist ein Federelement und/oder ein Dämpferelement vorgesehen, das eine Bewegung zwischen oberem und unterem Anteil federt, beziehungsweise dämpft. Der Fahrzeugsitzaufbau umfasst zumindest ein, sich im Wesentlichen in einer Längsrichtung und Breitenrichtung erstreckenden, Sitzträger und vorzugsweise ein sich im Wesentlichen in Breitenrichtung und Höhenrichtung erstreckenden Rückenträger. Der Rückenträger ist üblicherweise am Sitzträger um die Breitenrichtung drehbar angeordnet, sodass ein Winkel zwischen Sitzträger und Rückenträger veränderbar ist.

Nach einer Ausführungsform ist der Sitzträger zumindest teilweise, bevorzugt vollständig als Sitzträgerschale ausgebildet und bevorzugt fest mit dem oberen Anteil oder einer Verstellschiene verbunden, mit der der gesamte Fahrzeugsitzaufbau gegenüber dem Fahrzeugsitzunterbau in der Längsrichtung verschoben werden kann. Alternativ kann der Sitzträger auch als Rahmenkonstruktion ausgebildet sein. Bevorzug ist im oder am Sitzträger und zu diesem verschiebbar eine Sitztiefenplatte angeordnet, durch die die Tiefe einer Sitzfläche verändert werden kann. Weiterhin bevorzugt ist im oder am Sitzträger zudem eine Sitzneigungsplatte angeordnet, durch die eine Neigung der Sitzfläche gegenüber der wesentlichen Erstreckung des Sitzträgers verändert werden kann. Erfindungsgemäß ist zwischen der Sitztiefenplatte und der Sitzneigungsplatte die erste elektrische Antriebsvorrichtung zur Verstellung der Sitztiefe angeordnet. Dementsprechend muss weder über der Sitzneigungsplatte noch unter der Sitztiefenplatte zusätzlicher Bauraum zur Anordnung der Antriebsvorrichtung bereitgestellt werden.

Nach einer besonders bevorzugten Ausführungsform sind die Sitztiefenplatte und die Sitzneigungsplatte zumindest teilweise überlappend angeordnet und bilden einen Überlappungsbereich aus, wobei die erste Antriebsvorrichtung im Überlappungsbereich zwischen der Sitztiefenplatte und der Sitzneigungsplatte angeordnet ist.

Bevorzugt überlappen sich beide Platten in einem hinteren, dem Fahrzeugsitz zugewandten Bereich der Sitzneigungsplatte und einem vorderen, dem Fahrzeugsitz abgewandten Bereich der Sitztiefenplatte zumindest teilweise. Durch den Überlapp zwischen beide Platten kann vorteilhafterweise eine im Wesentlichen durchgehende Auflagefläche für ein Sitzpolster erzeugt werden. Dadurch kann auf die Anordnung einer Ausnehmung im Sitzpolster zur Aufnahme der Antriebsvorrichtung verzichtet werden. Weiterhin vorteilhaft ist, dass das Sitzpolster mit gleichmäßiger beziehungsweise stetiger Polsterdicke ausgebildet sein kann, wodurch der Sitzkomfort erhöht werden kann.

Nach einer besonders bevorzugten Ausführungsform weist der Fahrzeugsitz eine zweite elektrische Antriebsvorrichtung zur Verstellung der Sitzneigung auf, wobei die zweite elektrische Antriebsvorrichtung im Wesentlichen seitlich neben der Sitztiefenplatte und zwischen Sitzträger und Sitzneigungsplatte angeordnet ist.

Vorteilhafterweise ist die zweite elektrische Antriebsvorrichtung ebenfalls unterhalb der Sitzneigungsplatte und oberhalb des Sitzträgers angeordnet. Somit kann auf die Anordnung einer Ausnehmung zur Aufnahme der zweiten Antriebsvorrichtung im Sitzpolster verzichtet werden, wodurch das Sitzpolster gleichmäßig und stetig ausgebildet sein kann. Das Sitzpolster ist demnach insbesondere frei von Ausnehmungen zur Aufnahme von Antriebsvorrichtungen zur Verstellung der Sitztiefe und/oder Sitzneigung. Nach einer Ausführungsform ist die Antriebsvorrichtung zumindest teilweise vor der Sitztiefenplatte und zumindest teilweise neben der Sitztiefenplatte angeordnet.

Nach einer besonders bevorzugten Ausführungsform weist der Fahrzeugsitz eine Führungseinrichtung auf, die die Sitztiefenplatte verschiebbar mit dem Sitzträger verbindet, wobei die Führungseinrichtung eine Nutensteinführung umfasst.

Die Führungseinrichtung verbindet vorzugsweise die Sitztiefenplatte und den Sitzträger formschlüssig. Insbesondere lässt der Formschluss nur eine Verschiebung der Sitztiefenplatte in Längsrichtung zu, wohingegen eine Bewegung in Breitenrichtung und in Höhenrichtung im Wesentlichen blockiert ist.

Nach einer bevorzugten Ausführungsform weist die Sitztiefenplatte mindestens zwei, bevorzugt vier in Längsrichtung verlaufende Nuten auf. Die Nuten können dabei als Ausnehmungen im oder Durchführungen durch die Sitztiefenplatte ausgebildet sein. Der Sitzträger weist dabei komplementäre Nutensteine auf, die gleitend in den Nuten angeordnet sind. Alternativ können die Nuten auch im oder am Sitzträger und die Nutensteine an der Sitztiefenplatte angeordnet sein.

Die Nuten können zudem eine Entnahmeöffnung aufweisen, durch die die Nutensteine aus den Nuten entnommen, beziehungsweise in die Nuten eingesetzt werden können. Insbesondere sind die Entnahmeöffnungen in einem hinteren Bereich der Nuten angeordnet, wobei das Sitzplattenteil in einer Stellung mit maximaler Sitztiefe aus dem Sitzträger entnehmbar beziehungsweise in den Sitzträger einsetzbar ist.

Nach einer besonders bevorzugten Ausführungsform weist die erste elektrische Antriebsvorrichtung einen ersten Elektromotor, eine damit wirkverbundene erste Spindel und eine auf der ersten Spindel angeordnete erste Laufmutter auf, wobei die erste Antriebsvorrichtung an der Sitztiefenplatte befestigt ist und die erste Laufmutter drehfest in einem ersten Aufnahmebauteil aufgenommen ist, das am Sitzträger befestigt ist.

Nach einer bevorzugten Ausführungsform weist der erste Elektromotor einen Motordurchmesser von kleiner 50 mm, weiter bevorzugt von kleiner 40 mm und besonders bevorzugt von kleiner oder gleich 30 mm auf. Der erste Motor und die erste Spindel sind vorzugsweise auf einem Kunststoffhalter fest an der Sitztiefenplatte angeordnet. Die Laufmutter, ist durch das erste Aufnahmebauteil drehfest am Sitzträger befestigt, sodass eine Drehbewegung der Spindel eine Linearbewegung der Sitztiefenplatte gegenüber dem Sitzträger bewirkt. Die durch die Drehbewegung der Spindel ermöglichte Linearbewegung ist dabei bevorzugt größer als 40 mm, weiter bevorzugt größer als 50 mm und besonders bevorzugt größer oder gleich 60 mm. Eine Sitztiefe des Fahrzeugsitzes kann demnach zwischen einer Minimalposition mit einer minimalen Sitztiefe und einer Maximalposition mit einer maximal nutzbaren Sitztiefe eingestellt werden. Zusätzlich zur Maximalposition ist auch eine Montageposition für den Ein- beziehungsweise Ausbau der Sitztiefenplatte in den Sitzträger vorgesehen. Dabei kann die Montageposition einer Linearbewegung beziehungsweise Verschiebung von 75 mm oder größer entsprechen. In dieser kann nach einer Ausführungsform der Gewindeeingriff zwischen Spindel und Mutter hergestellt oder gelöst werden und damit die Wirkverbindung zwischen dem ersten Elektromotor und dem Sitzträger hergestellt oder gelöst werden. Bevor beziehungsweise nach dem Lösen des Gewindeeingriffes zwischen Spindel und Mutter ist die Sitzplatte durch eine Bewegung in Höhenrichtung in den Sitzträger einsetzbar beziehungsweise aus dem Sitzträger entnehmbar. Alternativ kann auch vorgesehen sein, dass in der Maximalposition die Laufmutter in das erste Aufnahmebauteil einsetzbar oder aus dem ersten Aufnahmebauteil entnehmbar ist.

Nach einer besonders bevorzugten Ausführungsform ist die Sitzneigungsplatte über ein Loslager drehbar um die Drehachse mit der Sitztiefenplatte verbunden, wobei das Loslager durch einen mit der Sitztiefenplatte verbundenen Zapfen und eine lochartige Ausnehmung in der Sitztiefenplatte gebildet wird.

Vorteilhafterweise ermöglicht das Loslager eine begrenzte Bewegung der Sitzneigungsplatte gegenüber der Sitztiefenplatte in Höhenrichtung und Längsrichtung. Dabei ist die lochartige Ausnehmung wesentlich größer ausgebildet als der Zapfen. Bevorzugt ist die Sitzneigungsplatte über ein rechtes und ein linkes Loslager mit der Sitztiefenplatte verbunden. Weiter bevorzugt sind die Loslager in einem hinteren Ende der Sitzneigungsplatte angeordnet. Alternativ können die Zapfen auch an der Sitztiefenplatte und die Ausnehmungen an der Sitzneigungsplatte angeordnet sein.

Nach einer besonders bevorzugten Ausführungsform weist die zweite elektrische Antriebsvorrichtung einen zweiten Elektromotor, eine damit wirkverbundene zweite Spindel und eine auf der zweiten Spindel angeordnete zweite Laufmutter auf, wobei die zweite Antriebsvorrichtung an der Sitztiefenplatte befestigt ist und die zweite Laufmutter drehfest in einem zweiten Aufnahmebauteil aufgenommen ist, wobei das zweite Aufnahmebauteil hebelartig ausgebildet ist und um eine zweite Drehachse drehbar mit der Sitztiefenplatte verbunden ist, wobei ein erster Hebelarm die zweite Laufmutter aufnimmt und ein zweiter Hebelarm mit der Sitzneigungsplatte verbunden ist.

Besonders bevorzugt ist an einem vorderen Ende der Sitztiefenplatte eine, insbesondere zylinderförmige Querstange, um die Breitenrichtung drehbar befestigt. Bevorzugt ist die Querstange dabei über einen sich senkrecht zur Breitenrichtung erstreckenden, angelartigen Abstandshalter mit der Sitztiefenplatte verbunden. Weiterhin bevorzugt weist der Fahrzeugsitz einen rechten und einen linken Abstandshalter auf. Die Sitzneigungsplatte ist dabei mit der Querstange verbunden, wobei eine Drehbewegung der Querstange zu einer Neigungsänderung der Sitzneigungsplatte gegenüber dem Sitzträger führt. Nach einer Ausführungsform ist einer der beiden Abstandshalter als zweiter Hebelarm des zweiten Aufnahmebauteils ausgebildet. Das zweite Aufnahmebauteil ist dabei winkelförmig ausgebildet, wobei der erste Hebelarm mit der zweiten Laufmutter verbunden ist, sodass eine Linearbewegung der Laufmutter in eine Drehbewegung des zweiten Aufnahmebauteils um die Breitenrichtung umgewandelt wird. Der zweite Hebelarm ist dabei mit der Querstange verbunden, sodass die Drehbewegung des Aufnahmebauteils eine Drehbewegung der Querstange bedingt. Der zweite Elektromotor und die zweite Spindel sind dabei insbesondere drehbar an der Sitztiefenplatte befestigt und insbesondere zumindest teilweise seitlich neben der Sitztiefenplatte. Dabei kann die Sitztiefenplatte zumindest teilweise trapezförmig ausgebildet sein, wobei sie in einem vorderen Bereich eine geringere Breite aufweist als in einem hinteren Bereich. Nach einer Ausführungsform ist die Spindel zumindest teilweise seitlich neben der Sitztiefenplatte angeordnet und der zweite Elektromotor vollständig vor der Sitztiefenplatte.

Nach einer besonders bevorzugten Ausführungsform ist die Sitztiefenplatte und die Sitzneigungsplatte mit der ersten Antriebsvorrichtung und der zweiten Antriebsvorrichtung als gemeinsam in den Sitzträger einsetzbare Sitzteilbaugruppe ausgebildet, wobei die Sitzteilbaugruppe ein Sitzpolster aufweist und wobei zwischen den Antriebsvorrichtungen und dem Sitzpolster zumindest die Sitzneigungsplatte angeordnet ist.

Die Ausbildung der Sitztiefenplatte und der Sitzneigungsplatte als Sitzteilbaugruppe erlauben insbesondere eine einfache Wartbarkeit des Fahrzeugsitzes durch gemeinsame Austauschbarkeit. Dabei sind die Antriebsvorrichtungen ohne einen Ausbau des Sitzträgers zugänglich, was vorteilhaft gegenüber herkömmlichen Fahrzeugsitzen ist, bei denen die Antriebsvorrichtungen unterhalb des Sitzträgers angeordnet sind. Weiterhin kann dadurch, dass die Antriebseinheiten zumindest zwischen Sitzneigungsplatte und Sitzträger angeordnet sind, ein Sitzpolster ohne Antriebsvorrichtungsbedingte Ausnehmungen gefertigt werden. Dementsprechend sind die Antriebsvorrichtungen in dem gepolsterten Sitzteilbaugruppe vormontiert und als Sitzteilbaugruppe mit der Sitzneigungsplatte und der Sitztiefenplatte zur gemeinsamen Montage beziehungsweise Demontage vorgesehen.

Nach einer besonders bevorzugten Ausführungsform erstrecken sich der erste Elektromotor und der zweite Elektromotor sich im Wesentlichen entlang der Breitenrichtung und die erste Spindel und die zweite Spindel erstrecken sich im Wesentlichen entlang der Längsrichtung.

Vorteilhafterweise können die Elektromotoren in Breitenrichtung angeordnet werden, wohingegen die Spindeln in Längsrichtung angeordnet werden. Dadurch lässt sich auf kleinem Bauraum eine möglichst großer Hubweg für die Antriebsvorrichtungen realisieren.

Weitere vorteilhafte Ausführungsformen ergeben sich aus den Unteransprüchen und der nachfolgenden Beschreibung in Verbindung mit der Zeichnung. Hierbei zeigen:
- Fig. 1: eine Gesamtansicht eines Fahrzeugsitzes;
- Fig. 2: eine Seitenansicht eines Fahrzeugsitzaufbaus;
- Fig. 3: eine Draufsicht auf einen Fahrzeugsitzaufbau mit Sitzneigungsplatte;
- Fig. 4: eine Draufsicht auf einen Fahrzeugsitzaufbau ohne Sitzneigungsplatte;
- Fig. 5a: eine Schnittansicht eines Fahrzeugsitzaufbaus mit minimaler Sitztiefe;
- Fig. 5b: eine Schnittansicht eines Fahrzeugsitzaufbaus mit maximaler Sitztiefe;
- Fig. 6a: eine Schnittansicht eines Fahrzeugsitzaufbaus mit minimaler Sitzneigung;
- Fig. 6b: eine Schnittansicht eines Fahrzeugsitzaufbaus mit maximaler Sitzneigung;

In den Figuren wurden teilweise Bezugszeichen übersichtlichkeitshalber weggelassen.

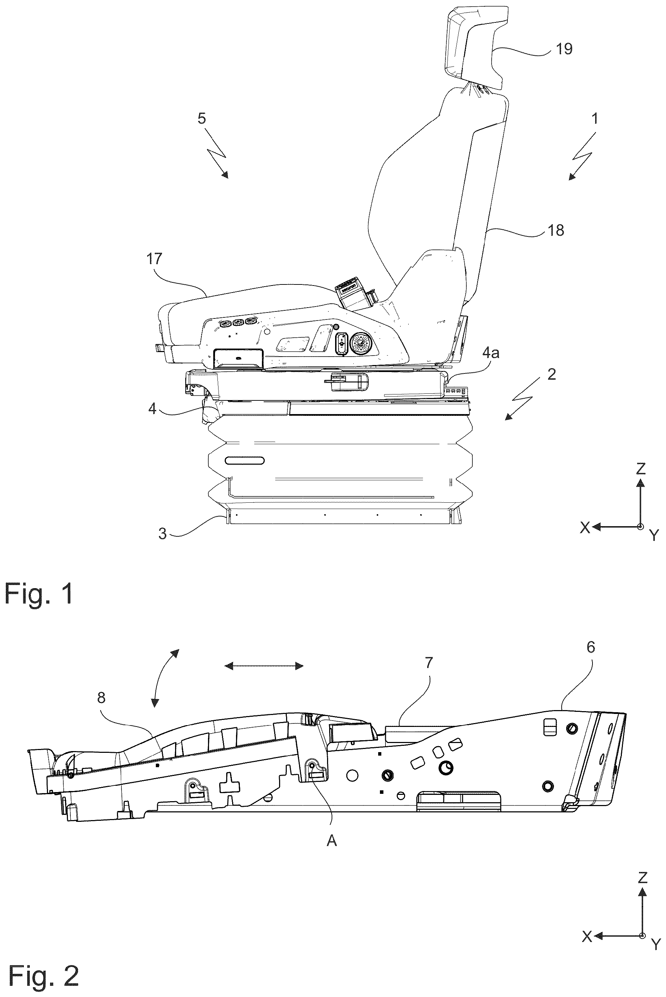

Die Figur 1 zeigt einen erfindungsgemäßen Fahrzeugsitz 1 in einer Seitenansicht. Der Fahrzeugsitz 1 kann entlang der Höhenrichtung Z in einen oberhalb gelegenen Fahrzeugsitzaufbau 5 und einen unterhalb gelegenen Fahrzeugsitzunterbau 2 aufgeteilt werden. Der Fahrzeugsitz weist dabei einen unteren Anteil 3 auf, der an der Karosserie eine Fahrzeuges befestigt ist und einen oberen Anteil 4 auf, an dem der Fahrzeugsitzaufbau 5 befestigt ist. Der untere Anteil 3 und der obere Anteil 4 sind mittels eines hier nicht gezeigten Scherengestells höhenverstellbar und gefedert miteinander verbunden. Der obere Anteil 4 umfasst zudem eine Paar Verstellschienen 4a, um eine Verschiebung des Fahrzeugsitzaufbaus 5 gegenüber dem Fahrzeugsitzunterbaus 3 in Längsrichtung X zu ermöglichen. Der Fahrzeugsitzaufbau 5 umfasst einen Sitzträger 6 in den eine Sitztiefenplatte 7 und eine damit verbundene Sitzneigungsplatte 8 eingesetzt sind. Sitztiefenplatte 7 und Sitzneigungsplatte 8 sind dabei zur gemeinsamen Bewegung gegenüber dem Sitzträger 6 in Längsrichtung X ausgebildet. Auf der Sitztiefenplatte 7 und der Sitzneigungsplatte 8 ist zudem ein Sitzpolster 17 angeordnet. Der Fahrzeugsitz 1 umfasst zudem eine an dem Sitzträger 6 befestigte Rückenlehne 18 sowie eine an der Rückenlehne 18 angeordnete Kopfstütze 19 oder Schulterstütze.

Die Figur 2 zeigt den Sitzträger 6 mit der Sitztiefenplatte 7 und der Sitzneigungsplatte 8 in einer Seitenansicht. Der Sitzträger 6 ist dabei als Schale ausgeführt, wobei ein Boden von einer Rückwand, einer Vorderwand und von zwei Seitenwänden eingeschlossen ist. Dadurch kann die Sitztiefenplatte 7 mit der Sitzneigungsplatte 8 entlang der Längsrichtung innerhalb des Sitzträgers 6 verschoben werden Dabei ist die Sitztiefenplatte in der Montageposition in den Sitzträger 6 einsetzbar oder aus diesem entnehmbar. Zur Verstellung einer Sitzneigung ist die Sitzneigungsplatte 8 drehbar um die erste Drehachse A an der Sitztiefenplatte 7 angeordnet. Da die Sitztiefenplatte 7 und der Sitzträger 6 im Wesentlichen parallel angeordnet sind, ist die Sitzneigungsplatte 8 damit auch gegenüber dem Sitzträger 6 drehbar um die erste Drehachse A angeordnet. Die Sitztiefenplatte 7 ist hierbei im Wesentlichen und die Sitzneigungsplatte 8 zumindest teilweise schalenförmig ausgebildet, um ein hier nicht gezeigtes Sitzpolster 17 aufzunehmen.

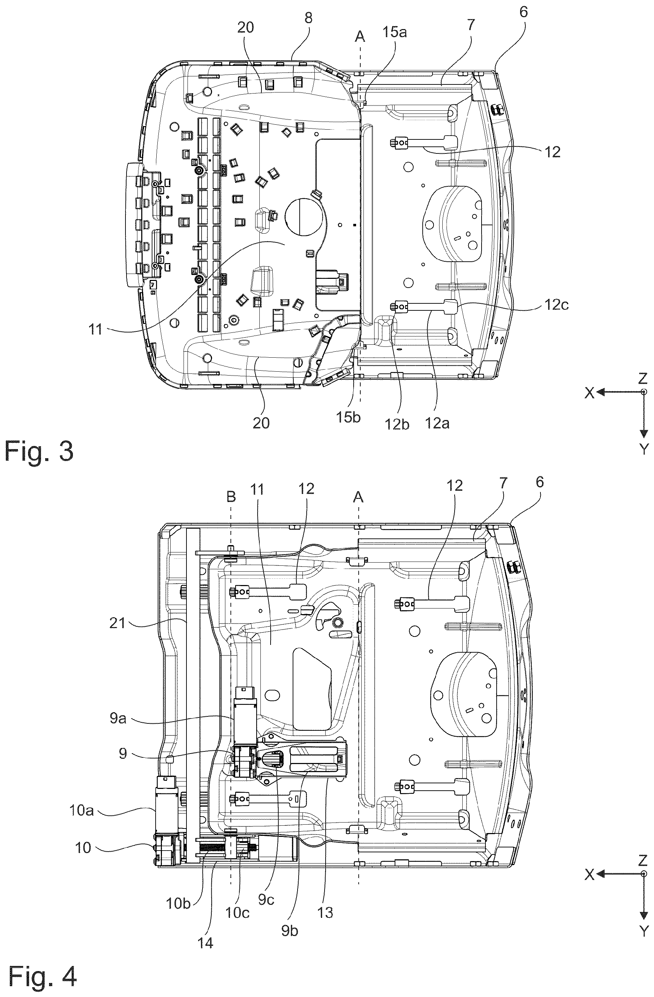

Die Figur 3 zeigt den Sitzträger 6, die Sitztiefenplatte 7 und die Sitzneigungsplatte in einer Draufsicht. In Höhenrichtung Z gesehen ist dabei die Sitztiefenplatte 7 zwischen Sitzträger 6 und Sitzneigungsplatte 8 angeordnet. Die Sitzneigungsplatte 8 ist in einem hinteren Bereich über ein erstes Loslager 15a und ein zweites Loslager 15b drehbar mit der Sitztiefenplatte verbunden. Weiter ist die Sitztiefenplatte 7 über Führungseinrichtungen 12 mit dem Sitzträger 6 verbunden, sodass sich die Sitztiefenplatte im Wesentlichen nur noch in Längsrichtung X bewegen kann. Dazu weist die Sitztiefenplatte vier Nuten 12a auf in die korrespondierende Nutensteine 12b des Sitzträgers 6 eingesetzt sind. Die Nuten 12a sind dabei paarweise jeweils rechtsseitig und linksseitig in einem vorderen Abschnitt und einem hinteren Abschnitt der Sitztiefenplatte 7 angeordnet. Die Nutensteine 12b können in den Nuten 12a entlanggleiten, wodurch eine Bewegung der Sitztiefenplatte 7 in Längsrichtung X ermöglicht wird. Die Sitztiefenplatte 7 kann demnach zwischen einer Montageposition und einer Minimalposition bewegt werden, wobei die Montageposition einer Position entspricht, in der die Sitztiefenplatte 7 maximal gegenüber dem Sitzträger nach vorne geschoben ist. Zudem ist eine Maximalposition einer maximal nutzbaren Sitztiefe vorgesehen. Dabei liegt die Maximalposition zwischen der Minimalposition und der Montageposition. Weiter entspricht die Minimalposition einer minimalen Sitztiefe, in der die Sitztiefenplatte 7 maximal nach hinten geschoben ist. An einem hinteren Ende weisen die Nuten 12a eine Entnahmeöffnung 12c auf. Die Entnahmeöffnung 12c ist dabei größer ausgebildet als die Nutensteine 12b, sodass die Sitztiefenplatte 7 in Höhenrichtung nach oben aus dem Sitzträger entnommen werden kann. Umgekehrt kann die Sitztiefenplatte 7 auch in den Sitzträger 6 eingesetzt werden. Die Sitztiefenplatte 7 ist in der Montageposition in den Sitzträger 6 einsetzbar oder aus dem Sitzträger 6 entnehmbar. Zudem weisen die Sitztiefenplatte 7 und die Sitzneigungsplatte 8 einen Überlappungsbereich 11 auf, in dem sich die Sitztiefenplatte 7 und die Sitzneigungsplatte 8 überschneiden. Der Überlappungsbereich 11 erstreckt sich dabei in Längsrichtung X im Wesentlichen von der Drehachse A bis zu einem vorderen Ende der Sitztiefenplatte 7. Die Sitzneigungsplatte 8 weist zudem rechts- und linksseitig Sitzwangen auf, wodurch ein Sitzpolster 17 durch die schalenförmige Ausbildung gestützt wird.

Die Figur 4 zeigt eine Draufsicht auf den Sitzträger 6 und die Sitztiefenplatte 7 in einer Draufsicht. Im Überlappungsbereich 11 sind zwei Nuten 12a angeordnet. Zwischen den beiden Nuten 12a ist zudem die erste elektrische Antriebsvorrichtung 9 angeordnet. Die erste elektrische Antriebsvorrichtung 9 umfasst einen ersten Elektromotor 9a, der sich im Wesentlichen in Breitenrichtung Y erstreckt und an der Sitztiefenplatte 7 befestigt ist. Der Elektromotor 9a treibt eine erste Spindel 9b an, die sich im Wesentlichen in Längsrichtung X erstreckt. Auf der ersten Spindel 9b ist eine erste Laufmutter 9c aufgesetzt, die in Gewindeeingriff mit der ersten Spindel steht. Durch den ersten Elektromotor 9a angetrieben kann durch die Drehung der ersten Spindel 9b die erste Laufmutter 9c gegenüber der Spindel in Längsrichtung X bewegt werden. Dazu ist die erste Laufmutter 9c in einem ersten Aufnahmebauteil 13 drehfest aufgenommen. Das Aufnahmebauteil 13 ist an dem Sitzträger 6 befestigt, sodass durch eine Drehung der ersten Spindel 9b die Sitztiefenplatte 7 gegenüber dem Sitzträger 6 in Längsrichtung X bewegt werden kann. Alternativ kann auch das erste Aufnahmebauteil 13 an der Sitztiefenplatte 7 und die erste Antriebsvorrichtung 9 an dem Sitzträger 6 befestigt sein. Weiterhin ist teilweise vorderhalb beziehungsweise teilweise seitlich neben der Sitztiefenplatte 7 eine zweite Antriebsvorrichtung 10 angeordnet. Die zweite Antriebsvorrichtung 10 ist dabei an der Sitztiefenplatte 7 befestigt und umfasst eine zweiten Elektromotor 10a, eine zweite Spindel 10b und eine zweite Laufmutter 10c. Der zweite Elektromotor 10a erstreckt sich im Wesentlichen entlang der Breitenrichtung Y und die zweite Spindel 10b erstreckt sich im Wesentlichen entlang der Längsrichtung X. Die zweite Laufmutter 10c ist zudem drehfest im zweiten Aufnahmebauteil 14 aufgenommen. Das zweite Aufnahmebauteil 14 ist drehbar um eine zweite Drehachse B an der Sitztiefenplatte 7 befestigt. Das zweite Aufnahmebauteil 14 ist fest mit einer sich in Breitenrichtung Y erstreckenden Querstange 21 verbunden, auf der die Sitzneigungsplatte 8 gelagert ist. Eine Drehung der Querstange 21 um die zweite Drehachse B bedingt somit eine Drehung der Sitzneigungsplatte 8 um die erste Drehachse A. Das Aufnahmebauteil 14 ist hebelartig ausgebildet, sodass eine Bewegung der zweiten Laufmutter 10c entlang der zweiten Spindel 10b eine Drehung des zweiten Aufnahmebauteils 14 um die zweite Drehachse B bedingt.

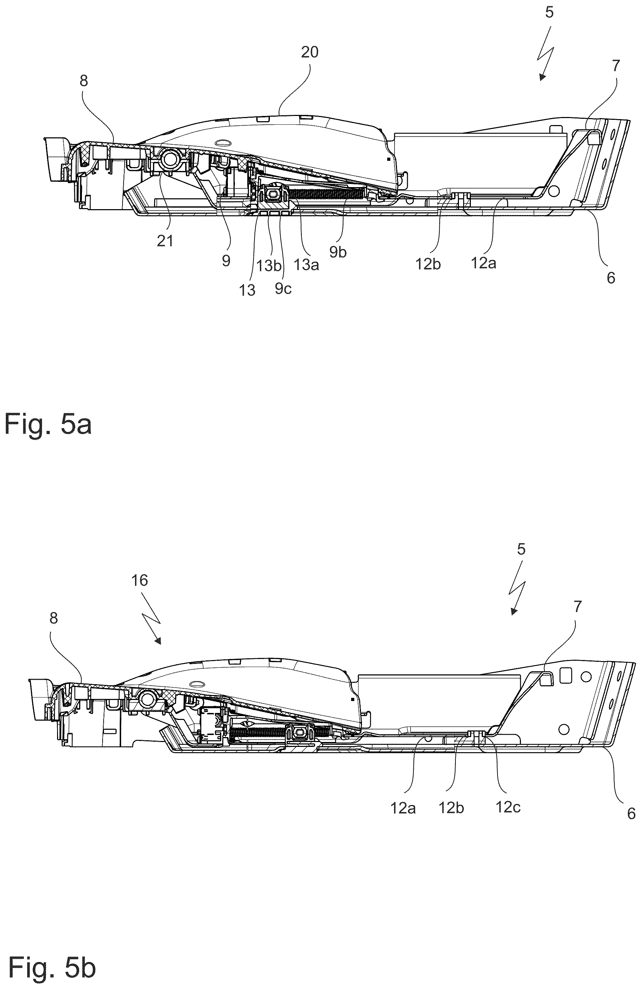

Die Figur 5a zeigt einen Schnitt durch einen Fahrzeugsitzaufbau 5 mit der Sitztiefenplatte 7 in einer Minimalposition. Sowohl der Sitzträger 6, die Sitztiefenplatte 7 als auch die Sitzneigungsplatte 8 mit den Sitzwangen 20 sind zumindest teilweise schalenförmig ausgebildet. Im Zwischenraum zwischen Sitzneigungsplatte 8 und Sitztiefenplatte 7 ist dabei die erste elektrische Antriebsvorrichtung 9 von außerhalb unzugänglich angeordnet. Der Nutenstein 12b ist dabei in der Nut 12a in einer vorderen Position angeordnet. Die erste Laufmutter 9c ist dabei in einer vorderen Position der ersten Spindel 9b angeordnet. Das erste Aufnahmebauteil 13 ist gabelförmig ausgebildet und nimmt zwei sich in Breitenrichtung Y erstreckende Zapfen der ersten Laufmutter 9c auf. Durch die Zapfen ist die erste Laufmutter 9c drehfest gegenüber einer Drehung um die Längsachse X angeordnet. Die Laufmutter 9c ist dabei zumindest teilweise drehbar um die Breitenrichtung Y in der Gabel 13a angeordnet. Die Gabel 13a weist dabei einen im Wesentlichen rechteckförmigen Aufnahmebereich zur Aufnahme der Zapfen der Laufmutter 9c auf. Die Zapfen sind dahingegen zumindest teilweise rund oder abgerundet ausgebildet um ein einführen des Zapfen in die Gabel 13a zu erleichtern. Um die Zapfen in der Gabel 13a zu fixieren ist je Zapfen ein Klammerelement 13b in der Gabel 13a angeordnet, das den Zwischenraum zwischen Gabel 13a und Zapfen im Wesentlichen komplementär ausfüllt und die Laufmutter 9c mittels einer Presspassung in der Gabel 13a des Aufnahmebauteils 13 fixiert. Weiterhin ist die Sitzneigungsplatte 8 auf der Querstange 21 gelagert. Dabei wird die Querstange 21 drehbar in eine schellenartigen Aufnahme der Sitzneigungsplatte aufgenommen.

Die Figur 5b zeigt einen Schnitt durch einen Fahrzeugsitzaufbau 5 mit der Sitztiefenplatte 8 in einer Montageposition. Die Montageposition entspricht dabei auch einer Entnahme- beziehungsweise Einsetzposition. Dabei kann die die Sitztiefenplatte 7, die Sitzneigungsplatte 8, die erste elektrische Antriebsvorrichtung 9, die zweite elektrische Antriebsvorrichtung 10 und das Sitzpolster 17 umfassende Sitzteilbaugruppe 16 gemeinsam in den Sitzträger 6 eingesetzt oder aus diesem entnommen werden. Die Sitzgruppe 16 bildet dabei eine vormontierte Baugruppe aus. Zum Einsetzten der Sitzteilbaugruppe 16 in den Sitzträger 6 werden die Nutensteine 12b durch die Entnahmeöffnungen 12c in die Nuten 12a eingesetzt. Zudem wird werden die Zapfen der Laufmutter 9c in das gabelförmige erste Aufnahmebauteil 13 eingesetzt. Durch ein Verfahren der Sitzteilbaugruppe 16 gegenüber dem Sitzträger 6 in Längsrichtung kann daraufhin die Sitzteilbaugruppe mit dem Sitzträger verriegelt werden, indem die Nutensteine entlang der Nuten 12a zumindest teilweise aus den Entnahmeöffnungen 12c bewegt werden. Um im Falle einer Motorfehlfunktion der ersten elektrischen Antriebseinheit 9 beziehungsweise des ersten Elektromotors 9a die Sitzteilbaugruppe 16 beziehungsweise die Sitztiefenplatte 7 aus dem Sitzträger 6 entnehmen zu können, ist das erste Aufnahmebauteil 13 zweiteilig aufgebaut. Dabei ist ein erster Anteil fest an dem Sitzträger befestigt, und ein zweiter Anteil, der die Laufmutter 9c aufnimmt, ist lösbar mit dem ersten Anteil durch ein Verbindungsmittel verbunden. Das Verbindungsmittel ist dabei ein Schraube, die von außerhalb des Sitzträgers 6 zugänglich ist.

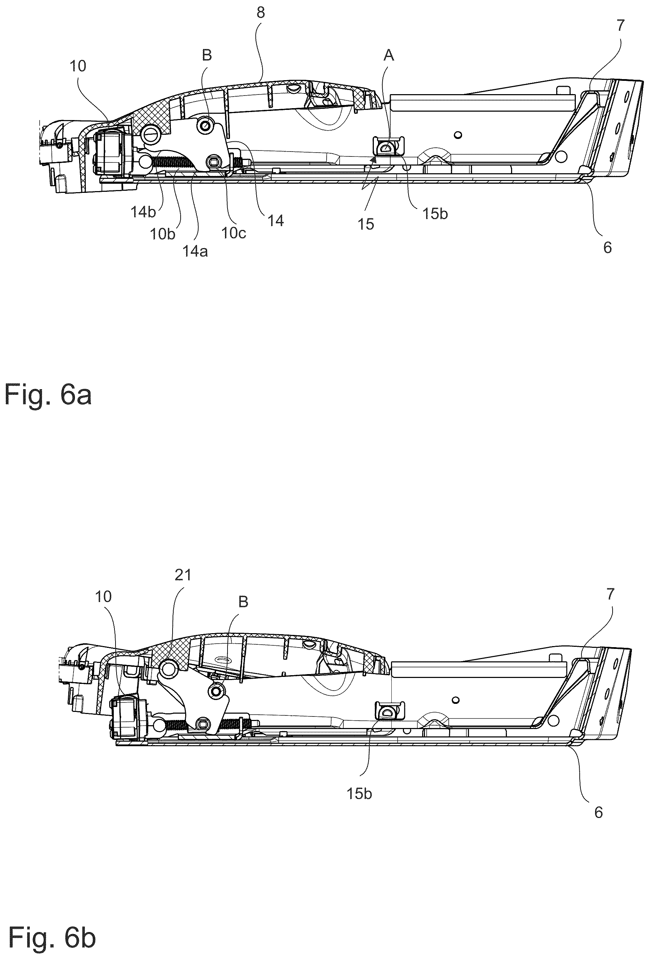

Die Figuren 6a und 6b zeigen einen Schnitt durch den Fahrzeugsitzaufbau 5 mit der Sitzneigungsplatte 8 in einer minimal geneigten Position (Figur 6a) und in einer maximal geneigten Position (Figur 6b). In einem mittigen Bereich der Sitztiefenplatte 7 weist selbige rechts- und linksseitig in einer Seitenwand eine Aufnahmeöffnung auf, in der jeweils ein Zapfen der Sitzneigungsplatte schwimmend gelagert ist. Alternativ kann auch die Sitztiefenplatte 7 die Zapfen und die Sitzneigungsplatte 8 die Aufnahmeöffnungen aufweisen. Die zweite Spindel 10b ist über die zweite Laufmutter 10c kraftübertragend mit dem zweiten Aufnahmebauteil 14 verbunden. Das zweite Aufnahmebauteil 14 ist als L-förmiger Hebel mit einem ersten Hebelarm 14a und einem zweiten Hebelarm 14b. Das zweite Aufnahmebauteil 14 ist dabei drehbar um die zweite Drehachse B an der Sitztiefenplatte 7 befestigt. Während der erste Hebelarm 14a die zweite Laufmutter 14c kraftübertragend aufnimmt, ist der zweite Hebelarm 14b mit der die Sitztiefenplatte 8 tragenden Querstange 21 verbunden. Durch eine Verfahren der zweiten Laufmutter 10c entlang der zweiten Spindel 10c ist demnach das zweite Aufnahmebauteil 14 und die Querstange um die zweite Drehachse B und damit die Sitzneigungsplatte 8 um die erste Drehachse A drehbar. Dabei sind sowohl die zweite elektrische Antriebsvorrichtung 10 als auch das zweite Aufnahmebauteil an der Sitztiefenplatte 7 angeordnet. Insbesondere ist der zweite Elektromotor 10a vor der Sitztiefenplatte 7 und die zweite Spindel 10b, die zweite Laufmutter 10c und das zweite Aufnahmebauteil 14 seitlich neben der Sitztiefenplatte 7 angeordnet. **In** Höhenrichtung Z ist die zweite Antriebsvorrichtung 10 zwischen Sitzneigungsplatte 8 und Sitzträger 6 angeordnet. Gemäß der Figur 6b ist die Sitzneigungsplatte 8 gegenüber der Sitztiefenplatte 7 beziehungsweise dem Sitzträger 6 geneigt. Die Neigungseinstellung der Sitzneigungsplatte 8 ist dabei unabhängig von der Tiefeneinstellung der Sitztiefenplatte 7.

### Bezugszeichenliste

- 1: Fahrzeugsitz
- 2: Fahrzeugsitzunterbau
- 3: Unterer Anteil
- 4: Oberer Anteil
- 4a: Verstellschienen
- 5: Fahrzeugsitzaufbau
- 6: Sitzträger
- 7: Sitztiefenplatte
- 8: Sitzneigungsplatte
- 9: erste elektrische Antriebsvorrichtung
- 9a: erster Elektromotor
- 9b: erste Spindel
- 9c: erste Laufmutter
- 10: zweite elektrische Antriebsvorrichtung
- 10a: zweiter Elektromotor
- 10b: zweite Spindel
- 10c: zweite Laufmutter
- 11: Überlappungsbereich
- 12: Führungseinrichtung
- 12a: Nut
- 12b: Nutensteine
- 12c: Entnahmeöffnung
- 13: erstes Aufnahmebauteil
- 13a: Gabel
- 13b: Klammerelement
- 14: zweites Aufnahmebauteil
- 14a: erster Hebelarm
- 14b: zweiter Hebelarm
- 15: Loslager
- 15a: erstes Loslager
- 15b: zweites Loslager
- 16: Sitzteilbaugruppe
- 17: Sitzpolster
- 18: Rückenlehne
- 19: Kopfstütze
- 20: Sitzwange
- 21: Querstange
- A: Drehachse
- B: zweite Drehachse
- X: Längsrichtung
- Y: Breitenrichtung
- Z: Höhenrichtung

## Patentansprüche

1. Fahrzeugsitz (1), umfassend einen Fahrzeugsitzunterbau (2) mit einem unteren Anteil (3) und einem dazu höhenverstellbaren oberen Anteil (4) und einem an dem oberen Anteil (4) befestigten Fahrzeugsitzaufbau (5), wobei der Fahrzeugsitzaufbau (5) einen Sitzträger (6), eine Sitztiefenplatte (7) zur Verstellung einer Sitztiefe und eine Sitzneigungsplatte (8) zur Verstellung einer Sitzneigung umfasst, wobei die Sitztiefenplatte (7) in einer Längsrichtung (X) verschiebbar in dem Sitzträger (6) angeordnet ist und die Sitzneigungsplatte (8) um eine in Breitenrichtung (Y) verlaufende erste Drehachse (A) drehbar und oberhalb der Sitztiefenplatte (7) angeordnet ist,
**dadurch gekennzeichnet,dass**
der Fahrzeugsitz (1) eine erste elektrische Antriebsvorrichtung (9) zur Verstellung der Sitztiefe aufweist, wobei die erste elektrische Antriebsvorrichtung (9) in einer Höhenrichtung (Z) zwischen Sitztiefenplatte (7) und Sitzneigungsplatte (8) angeordnet ist.

2. Fahrzeugsitz (1) nach Anspruch 1,
**dadurch gekennzeichnet,dass**
die Sitztiefenplatte (7) und die Sitzneigungsplatte (8) zumindest teilweise überlappend angeordnet sind und einen Überlappungsbereich (11) ausbilden, wobei die erste Antriebsvorrichtung (9) im Überlappungsbereich (11) zwischen der Sitztiefenplatte (7) und der Sitzneigungsplatte (8) angeordnet ist.

3. Fahrzeugsitz (1) nach Anspruch 1,
**dadurch gekennzeichnet,dass**
der Fahrzeugsitz (1) eine zweite elektrische Antriebsvorrichtung (10) zur Verstellung der Sitzneigung aufweist, wobei die zweite elektrische Antriebsvorrichtung (10) im Wesentlichen seitlich neben der Sitztiefenplatte (7) und zwischen Sitzträger (6) und Sitzneigungsplatte (8) angeordnet ist.

4. Fahrzeugsitz (1) nach einem der vorangegangenen Ansprüche,
**dadurch gekennzeichnet,dass**
der Fahrzeugsitz (1) eine Führungseinrichtung (12) aufweist, die die Sitztiefenplatte (7) verschiebbar mit dem Sitzträger (6) verbindet, wobei die Führungseinrichtung (12) eine Nutensteinführung umfasst.

5. Fahrzeugsitz (1) nach einem der vorangegangenen Ansprüche,
**dadurch gekennzeichnet,dass**
die erste elektrische Antriebsvorrichtung (9) einen ersten Elektromotor (9a), eine damit wirkverbundene erste Spindel (9b) und eine auf der ersten Spindel (9b) angeordnete erste Laufmutter (9c) aufweist, wobei die erste Antriebsvorrichtung (9) an der Sitztiefenplatte (7) befestigt ist und die erste Laufmutter (9c) drehfest in einem ersten Aufnahmebauteil (13) aufgenommen ist, das am Sitzträger (6) befestigt ist.

6. Fahrzeugsitz (1) nach einem der vorangegangenen Ansprüche,
**dadurch gekennzeichnet,dass**
die Sitzneigungsplatte (8) über ein Loslager (15) drehbar um die Drehachse (A) mit der Sitztiefenplatte (7) verbunden ist, wobei das Loslager (15) durch einen mit der Sitztiefenplatte (7) verbundenen Zapfen und eine lochartige Ausnehmung in der Sitztiefenplatte (7) gebildet wird.

7. Fahrzeugsitz (1) nach Anspruch 3,
**dadurch gekennzeichnet,dass**
die zweite elektrische Antriebsvorrichtung (10) einen zweiten Elektromotor (10a), eine damit wirkverbundene zweite Spindel (10b) und eine auf der zweiten Spindel (10b) angeordnete zweite Laufmutter (10c) aufweist, wobei die zweite Antriebsvorrichtung (10) an der Sitztiefenplatte (7) befestigt ist und die zweite Laufmutter (10c) drehfest in einem zweiten Aufnahmebauteil (14) aufgenommen ist, wobei das zweite Aufnahmebauteil (14) hebelartig ausgebildet ist und um eine zweite Drehachse (B) drehbar mit der Sitztiefenplatte (7) verbunden ist, wobei ein erster Hebelarm (14a) die zweite Laufmutter (10c) aufnimmt und ein zweiter Hebelarm (14b) mit der Sitzneigungsplatte (8) verbunden ist.

8. Fahrzeugsitz (1) nach einem der Vorangegangenen Ansprüche,
**dadurch gekennzeichnet,dass**
die Sitztiefenplatte (7) und die Sitzneigungsplatte (8) mit der ersten Antriebsvorrichtung (9) und der zweiten Antriebsvorrichtung (10) als gemeinsam in den Sitzträger (6) einsetzbare Sitzteilbaugruppe (16) ausgebildet ist, wobei die Sitzteilbaugruppe (16) ein Sitzpolster (17) aufweist und wobei zwischen den Antriebsvorrichtungen (9,10) und dem Sitzpolster (17) zumindest die Sitzneigungsplatte (8) angeordnet ist.

9. Fahrzeugsitz (1) nach Anspruch 5 und 7,
**dadurch gekennzeichnet,dass**
der erste Elektromotor (9a) und der zweite Elektromotor (10a) sich im Wesentlichen entlang der Breitenrichtung (Y) erstrecken und die erste Spindel (9b) und die zweite Spindel (10b) sich im Wesentlichen entlang der Längsrichtung (X) erstrecken.

10. Fahrzeugsitz (1), umfassend einen Fahrzeugsitzaufbau (5) mit einem zumindest teilweise schalenförmigen Sitzträger (6), einer Sitztiefenplatte (7) zur Verstellung einer Sitztiefe und eine Sitzneigungsplatte (8) zur Verstellung einer Sitzneigung, wobei die Sitztiefenplatte (7) in einer Längsrichtung (X) verschiebbar in dem Sitzträger (6) angeordnet ist und die Sitzneigungsplatte (8) um eine in Breitenrichtung (Y) verlaufende erste Drehachse (A) drehbar und oberhalb der Sitztiefenplatte (7) angeordnet ist, **dadurch gekennzeichnet,dass**
der Fahrzeugsitz (1) eine erste elektrische Antriebsvorrichtung (9) zur Verstellung der Sitztiefe aufweist, wobei die erste elektrische Antriebsvorrichtung (9) in einer Höhenrichtung (Z) zwischen Sitztiefenplatte (7) und Sitzneigungsplatte (8) angeordnet ist.
